# EUROPEAN PATENT APPLICATION

(11) **EP 3 808 590 A1**
(43) Date of publication of application: **21.04.2021**
(21) Application number: 19821991.7
(22) Date of filing: 11.03.2019
(51) Int. Cl.: B60L 3/00, B61C 17/00

(54) **CONDITION MONITORING DEVICE AND TRANSPORTATION VEHICLE MOUNTED WITH SAME**

(30) Priority: 18.06.2018 JP 2018115071
(71) Applicant: Hitachi, Ltd., Tokyo 100-8280 (JP)
(72) Inventor: TAKAHASHI, Akeshi, Tokyo 100-8280 (JP); YAMAGUCHI, Takuma, Tokyo 100-8280 (JP); TOKUYAMA, Kazuo, Tokyo 100-8280 (JP)
(74) Representative: MERH-IP Matias Erny Reichl Hoffmann Patentanwälte PartG mbB
(86) International application number: PCT/JP2019/009830
(87) International publication number: WO 2019/244423

(57) **Abstract**

This condition monitoring device has at least: a sensor 201 that is attached to electric wiring 22 connecting a power conversion device 101 and a rotating electric machine 102 and measures at least either the current or the voltage in the electric wiring 22; a signal processing unit 301 for obtaining a signal output from the sensor 201 via a signal cable 202 and converting the signal to a predetermined format; a communication unit 401 for transmitting the output of the signal processing unit 301 to the outside of a transportation vehicle 1; and a shielding housing 302 for covering the sensor 201.

## Description

### Technical Field

The present invention relates to a railway vehicle, an automobile, and other transportation vehicles.

### Background Art

Time-based maintenance (TBM) based on mileage or usage period is the mainstream for maintenance of electric drive system parts and vehicle parts mounted on a moving object such as railway vehicles, and the part replacement cycle is set based on past performance. It is difficult to partially remove or disassemble these parts frequently because it is necessary to constantly guarantee the electrical and mechanical reliability of the vehicle product. Therefore, it is difficult to continuously grasp the actual deterioration status, and it is also difficult to optimize the replacement cycle based on the deterioration status. In addition, daily visual inspections are carried out for railway vehicles to prevent serious breakdowns, but it is difficult to visually check the abnormality of the electric drive system parts mounted on the vehicle underfloor.

Therefore, the condition-based maintenance (CBM) technology for monitoring the condition of parts with sensors that measure vibration, temperature, and sound of electric drive system parts and vehicle parts has been developed. However, in addition to the risk of these sensors themselves failing, the acquired data varies greatly depending on the mounting condition, so that it is difficult to provide a highly reliable condition monitoring device by this method. On the contrary, current measuring instruments used in electric drive systems have a low risk of failure and in addition, the effect of variation due to the mounting condition is small, so that a technique has been developed in which the feature amount related to abnormalities of electric drive system parts and vehicle parts are extracted using the obtained current information.

For example, for the purpose of "making it possible to detect various abnormalities related to an electric vehicle", PTL 1 discloses a technology in which "the abnormality determination ECU 10 stores the waveform of the harmonic component when it is regarded as normal in the memory. The abnormality determination ECU 10 detects a change in the harmonic component by comparing the waveforms of harmonic components measured during driving with the waveform stored in the memory".

### Citation List

### Patent Literature

PTL 1: JP 2015-53767 A

### Summary of Invention

### Technical Problem

However, transportation vehicles such as railway vehicles are generally used continuously even after 10 years or more have passed since the start of operation, and an inverter and a rotating electric machine, which are the core of the electric drive system, are also often used for 10 years or more. PTL 1 discloses an electric drive system incorporating a condition monitoring device. From a practical point of view there is a great demand for a condition monitoring device that can be easily mounted on an existing vehicle, or even on a new vehicle without a major change from a conventional vehicle.

Therefore, an object of the present invention is to provide a condition monitoring device that can be easily mounted and a transportation vehicle on which the condition monitoring device is mounted.

### Solution to Problem

To achieve the above object, the present invention includes various embodiments, one of which is that in a condition monitoring device for an electric drive system in a transportation vehicle driven by the electric drive system including at least a power conversion device and a rotating electric machine, the condition monitoring device includes at least, a sensor that is attached to electric wiring connecting the power conversion device and the rotating electric machine and measures at least either a current or a voltage in the electric wiring, a signal processing unit for obtaining a signal output from the sensor via a signal cable and converts the signal into a predetermined format, a communication unit for transmitting an output of the signal processing unit to an outside of the transportation vehicle, and a shielding housing for covering the sensor.

### Advantageous Effects of Invention

According to the present invention, it is possible to provide a condition monitoring device that can be easily mounted and a transportation vehicle on which the condition monitoring device is mounted. Problems, configurations, and effects other than those described above will become apparent from the following description of embodiments.

### Brief Description of Drawings

[FIG. 1] FIG. 1 is an explanatory diagram of an installed state of a condition monitoring device according to the first embodiment of the present invention.
[FIG. 2] FIG. 2 is an explanatory diagram of a mounting method of the condition monitoring device according to the first embodiment of the present invention.
[FIG. 3] FIG. 3 is a diagram showing a signal processing flow of the condition monitoring device according to the first embodiment of the present invention.
[FIG. 4] FIG. 4 is an explanatory diagram showing a configuration of a power distribution box according to the first embodiment of the present invention.
[FIG. 5] FIG. 5 is a vehicle underfloor layout view seen from the ground according to the second embodiment of the present invention.
[FIG. 6] FIG. 6 is a vehicle underfloor layout view seen from the side according to the third embodiment of the present invention.
[FIG. 7] FIG. 7 is a diagram showing a signal processing flow of a condition monitoring device according to the fourth embodiment of the present invention.
[FIG. 8] FIG. 8 is a vehicle underfloor layout view seen from the ground according to the fourth embodiment of the present invention.

### Description of Embodiments

Hereinafter, embodiments of the present invention will be described with reference to the drawings. In the following description, the same components are given the same symbols. Their names and functions are the same, and duplicate explanations should be avoided. In addition, although the following explanation is directed to a railway vehicle, the effect of the present invention is not limited to this. It can also be applied to a hybrid vehicle, an electric vehicle, and a transportation vehicle for construction machinery each of which has an electric drive system. It is directed to a 1C2M electric drive system that supplies power from one inverter to two rotating electric machines, but it can be 1C1M, 1C4M, or a combination of others. Further, the rotating electric machine may be an induction machine, a permanent magnet synchronous machine, a winding type synchronous machine, or a synchronous reluctance rotating electric machine. Further, although an ammeter is used in the following description, a voltmeter that can be retrofitted to an existing wiring cable may be used, or an ammeter and a voltmeter may be used together.

### First embodiment

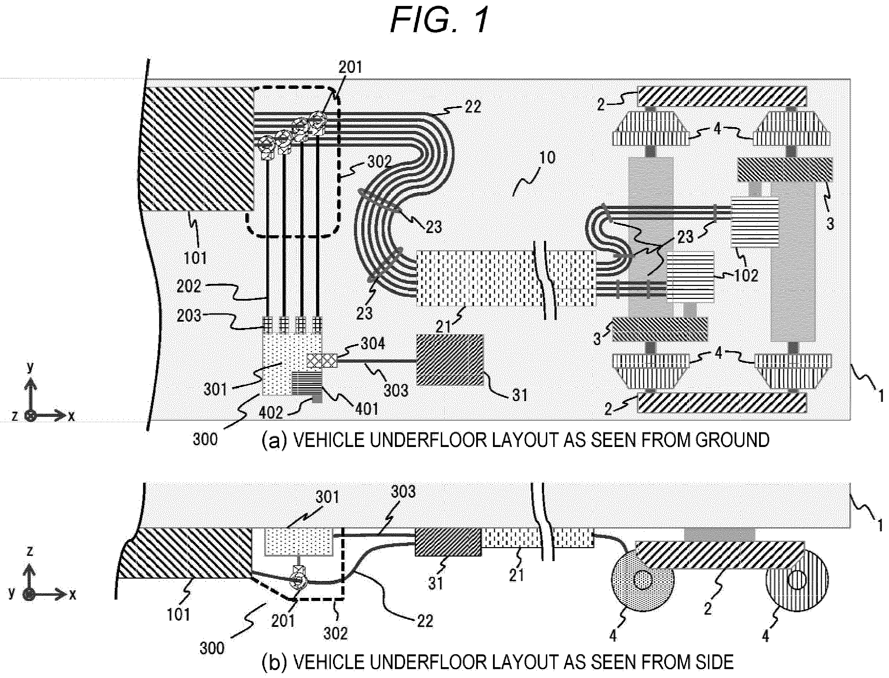

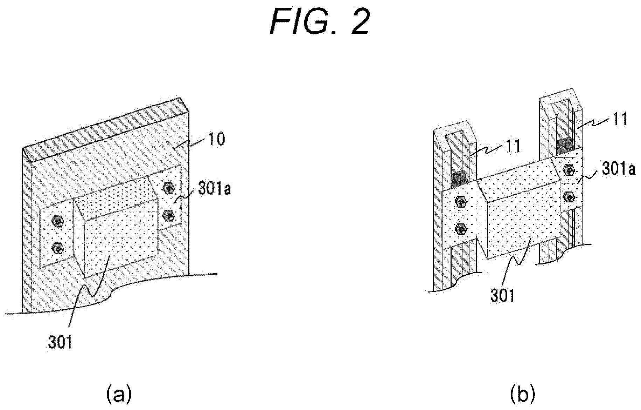

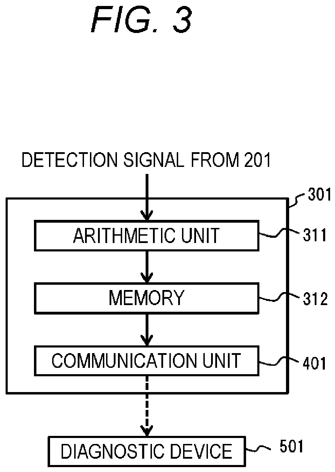

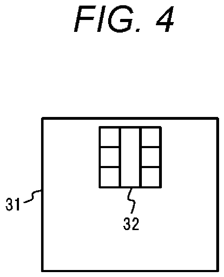

Hereinafter, the first embodiment of the present invention will be described with reference to FIGS. 1 to 4. FIG. 1 is an explanatory diagram of an installed state of a condition monitoring device according to the first embodiment of the present invention. FIG. 2 is an explanatory diagram of a mounting method of the condition monitoring device according to the first embodiment of the present invention. FIG. 3 is a diagram showing a signal processing flow of the condition monitoring device according to the first embodiment of the present invention. FIG. 4 is an explanatory diagram showing a configuration of a power distribution box according to the first embodiment of the present invention.

The installation state of the condition monitoring device of the embodiment will be described with reference to FIG. 1. FIG. 1(a) shows a vehicle underfloor layout view seen from the ground, and FIG. 1(b) shows a vehicle underfloor layout view seen from the side. The direction of travel of the vehicle is represented by the x-axis, the direction perpendicular to the direction of travel is represented by the y-axis, and the vertical upward direction of the vehicle is represented by the z-axis.

As shown in FIG. 1, the electric drive system of a railway vehicle is mainly composed of an inverter device 101 which is a power conversion device and a rotating electric machine 102 which is a driving force source, and AC power is supplied from the inverter device 101 to the rotating electric machine 102 to drive the rotating electric machine 102. The rotating electric machine 102 is connected to a wheel 4 via a gearbox 3, and traveling of a vehicle 1 is controlled by the rotating electric machine 102. The rotating electric machine 102, the gearbox 3 and the wheel 4 are all mechanically integrated with a carriage 2, and when the vehicle 1 travels on a curved track, the carriage 2 rotates around the z-axis by a predetermined angle. On the other hand, the inverter device 101 is fixed to a vehicle underfloor 10, and the inverter device 101 is electrically connected to the rotating electric machine 102 by main wiring 22.

In this vehicle 1, two rotating electric machines 102 are mounted on the carriage 2. Therefore, six lines of the main wiring 22 are provided between the inverter device 101 and the rotating electric machine 102 to supply a three-phase alternating current. In addition, a plurality of lines of wiring such as a ground wire and wiring for auxiliary equipment are laid on vehicle underfloor 10, but the illustration is omitted for the sake of simplicity. The main wiring 22 serves as a power sharing path from the inverter device 101 to the rotating electric machine 102, and most of the main wiring 22 is housed in a metal duct 21. Since the main wiring 22 is responsible for supplying high-voltage and large-current power of traction motor, a large amount of radiation noise is generated, and this noise can be suppressed by the metal duct 21.

In the main wiring 22 laid on the vehicle underfloor 10 as described above, most of the portion connecting the inverter device 101 and the rotating electric machine 102 is housed in the metal duct 21. On the other hand, there are some portions that are not covered by the metal duct 21 and are exposed. The main wiring 22 is exposed without being covered by the metal duct 21 at a position near the inverter device 101 and a position near the rotating electric machine 102, for example. This is because these positions are the routing space of the main wiring 22 at the vehicle underfloor 10, and it is not appropriate to cover them with the metal duct 21. By providing the space, the degree of freedom regarding the routing of the main wiring 22 is improved. The exposed portion of the main wiring 22 is tied up with a binding band 23, preventing the main wiring 22 from shaking due to the vibration generated while the vehicle 1 is traveling and the connection terminals with the inverter device 101 and the rotating electric machine 102 from loosening.

The arrangement relationship between the main wiring 22 and the metal duct 21 is not limited to the example of FIG. 1, and the metal duct 21 having an appropriate length and shape according to the routing of the main wiring 22 may be provided. Further, the metal duct 21 may house another wiring in addition to the main wiring 22, and may house a plurality of lines of wiring at high density. Generally, the metal duct 21 houses no new wiring except when the electric drive system is updated (replaced), and it is not necessary to remove the metal duct 21, so that no inconvenience occurs.

Subsequently, a condition monitoring device 300 will be described. The condition monitoring device 300 is fixed to the vehicle underfloor 10 and includes, mainly, a signal processing unit 301 having an arithmetic unit 311, a plurality of sensors 201 attached to the main wiring 22, a power cable 303 connected to the signal processing unit 301, and a power connector 304 provided at the end of the power cable 303.

The condition monitoring device 300 detects the current flowing between the inverter device 101 and the rotating electric machine 102 and voltage therebetween by the sensor 201, and performs a predetermined calculation. The sensor 201 is, for example, an ammeter or a voltmeter, and has a circuit configuration capable of measuring, from above the coating of the main wiring 22, the current flowing through the main wiring 22 and the generated voltage.

The sensor 201 is attached to a portion, of the main wiring 22, exposed from the metal duct 21 where the exposed portion is near the inverter device 101. As a result, the man-hours required for installation can be shortened. Also, when the exposed portion is in the vicinity of the inverter device 101, there is no change in a relative position between both the sensor 201 and the signal processing unit 301 when they are fixed to the vehicle underfloor 10, so that the risk of the sensor 201 falling off can be eliminated. Although the main wiring 22 has an exposed portion even in the vicinity of the rotating electric machine 102, the carriage 2 rotates around the z-axis, so that the relative position between the sensor 201 and the signal processing unit 301 is likely to change. Therefore, the location where the sensor 201 is installed is preferably near the inverter device 101. For the mounting structure of the sensor 201, for example, a fixture that clamps the main wiring 22 may be used, or another unit may be used.

The sensor 201 and the signal processing unit 301 are connected by a signal cable 202 according to the number of sensors 201 disposed. A connector 203 is used for, for example, the connection between the signal cable 202 and the signal processing unit 301 as shown in FIG. 1. The signal cable 202 and the sensor 201 can be easily replaced by using the connector 203. In addition, by providing a plurality of connectors 203 in the signal processing unit, when installing the condition monitoring device 300 on a vehicle with different numbers of main wiring 22, it is possible to easily adjust the number of sensors 201 attached when attaching a plurality of sensors 201 to one main wiring 22. The lengths of the signal cables 202 may be different from each other, or, the length may be unified to a length of the cable used when the distance between the main wiring 22 to be measured and the signal processing unit 301 is the longest. Further, the signal cable 202 is preferably a cable (shielded wire) having an electromagnetic shield coating in order to suppress the superposition of noise. Specifically, since the signal cable 202 passes in the vicinity of the main wiring 22, it can be expected that the measurement accuracy will be improved because the signal cable 202 has a shielding function. In the example shown in FIG. 1, the signal cable 202 is composed of a single wire from the sensor 201 to the signal processing unit 301, but for example, a plurality of signal cables may be connected to form a single transmission line. For example, a signal cable having high shielding performance may be used in the region close to the main wiring 22, and a general signal cable may be used in the region far from the main wiring.

Further, the condition monitoring device 300 has a shielding housing 302 for covering the sensor 201. The shielding housing 302 is fixed to the vehicle underfloor 10 and houses the sensor 201 and part of the signal cable 202 in a space formed by the wall face of the vehicle underfloor 10 and the inner wall face of the shielding housing 302. Since the installation location of the shielding housing 302 is near the inverter device 101 as in the installation location of the sensor 201, the installation is relatively easy, and the position does not change, so that the risk of damage is small and long-term use is possible. Further, in order to avoid interference with the main wiring 22 and interference with the signal cable 202, it is preferable to have a structure in which a notch is provided in each of a portion through which the main wiring 22 passes and a portion through which the signal cable 202 passes.

The shielding housing 302 is made by processing, for example, a highly conductive metal plate, shields noise generated from the main wiring 22, and contributes to improving the measurement accuracy of the condition monitoring device 300. When the noise shielding effect of the shielding housing 302 can be expected sufficiently, the restrictions on the shielding performance of the signal cable 202 have been relaxed, and it is easier to select a cable suitable for measurement. The shielding housing 302 may be manufactured by attaching a metal foil or a thin metal plate of a conductor to the outside or the inside after the housing is made of resin. The metal foil or the metal plate used for the shielding housing 302 is made of, for example, aluminum, iron, or copper.

The condition monitoring device 300 operates by receiving power supply from the outside. The power connector 304 is attached to the signal processing unit 301 for the power supply, and the power cable 303 is connected to the power connector 304. The power cable 303 is connected to a power distribution box 31 closest to the mounting position of the condition monitoring device 300, and power is supplied to the signal processing unit 301 from the distribution box 31. As shown in FIG. 4, the power distribution box 31 generally houses a terminal block 32 and distributes the electric power supplied from the overhead wire or the like to the in-vehicle equipment of the vehicle 1. Therefore, by connecting the power cable 303 of the condition monitoring device 300 to the terminal block 32, it is not necessary provide a new power supply circuit part and a new circuit element, and the existing terminal block 32 is used, so that no special wiring work is required. As a result, the installation of the condition monitoring device 300 can be greatly facilitated.

It is desirable that the power cable 303 be also shield-coated as in the signal cable 202, and the shield coating can prevent the power cable 303 from being a noise source against the signal measurement and the existing equipment. In addition, since the power cable 303 is connected to the nearest power distribution box 31, the cable length is practically the shortest. The influence of noise generated from the power cable 303 is suppressed by shortening the cable length.

In addition to the configuration in which the power connector 304 directly supplies power to the signal processing unit 301, a lead wire may be connected to the battery from the power connector 304, and the electric power that drives the signal processing unit 301 may be extracted from this battery. By installing the battery, measurement can be continued even when power sharing cannot be received from the power distribution box 31. For example, even when a storage battery and a generator are provided, and a power system that switches between the power supplied from the overhead wire and the power supplied from those power sources is provided, it is possible to perform measurement with a short measurement interruption period or without a measurement interruption period.

Further, the signal processing unit 301 of the condition monitoring device 300 is attached to the vehicle underfloor 10 so as not to fall off due to vibration of the vehicle 1 while traveling. In this case, as shown in FIG. 2, it is preferable that the signal processing unit 301 be provided with a mounting seat 301a in advance. As shown in FIG. 2, the mounting seat 301a may be integrated with the housing of the signal processing unit 301 to project horizontally from the vehicle underfloor 10 with respect to the ground, or may be configured to be attached as a separate part. Further, the method of fixing the mounting seat 301a may be a method in which the mounting seat 301a is firmly fastened to the vehicle underfloor 10 with bolts or the like as shown in FIG. 2(a), or may be a method in which the mounting seat 301a is fastened to a beam 11 provided on the vehicle underfloor 10 as shown in FIG. 2(b). This also applies to the signal cable 202 and the power cable 303. It is desirable to tie them with a binding band or the like so that it will not shake due to vibration when the vehicle 1 is traveling, and it is desirable that they be firmly fixed to the vehicle underfloor member such as the vehicle underfloor 10 or the beam 11 by using a mounting bracket or the like.

Further, the housing of the signal processing unit 301 is made of metal, and is brought into metal contact with the vehicle underfloor member having metal as a main component so as to be electrically conductive. Then, the housing is connected to the ground potential of the power distribution box 31 through the shield of the power connector 304 and the power cable 303. By providing such a connection and configuration the noise signal flowing through the vehicle 1 is prevented from breaking into the internal circuit of the signal processing unit 301, and it is possible to effectively suppress damage to the arithmetic unit and malfunction of the internal circuit.

Further, a noise filter may be installed at the connecting portion of the connector 203 or the connecting portion of the power connector 304. Reduction in noise for the internal circuit of the signal processing unit 301 can be achieved more effectively by providing the noise filter. Since the vehicle underfloor 10 and beam 11 are rigid metal bodies, the rigidity is not impaired by the mounting process of the signal processing unit 301 and the mounting of the shielding housing 302 as described above, and the traveling performance or long-term reliability of the vehicle 1 are not affected. Furthermore, since the shielding housing 302, the signal processing unit 301, the signal cable 202, and the power cable 303 have a shielding function, the effect of electromagnetic waves generated by the operation of the condition monitoring device 300 on existing equipment can be greatly reduced, so that it is possible to achieve both the stable operation of the existing equipment and status monitoring by the retrofit condition monitoring device 300.

Since the condition monitoring device 300 of the embodiment has the above-mentioned configuration, the current or the voltage from the inverter device 101 to the rotating electric machine 102 is measured, that is, the detection signal is output from the sensor 201 to the signal processing unit 301. The signal processing unit 301 includes the arithmetic unit 311, a memory 312, and a communication unit 401 as shown in FIG. 3, and the arithmetic unit 311 performs a predetermined calculation using the detection signal. The arithmetic unit 311 has an AD converter (not shown), and performs a calculation required for status monitoring after converting an analog signal received from the sensor 201 into a digital signal.

The operation content in the arithmetic unit 311 is, for example, a data conversion process necessary for analyzing an abnormality in a state or a sign thereof. The algorithm required for this process is recorded in the memory 312 before the condition monitoring device 300 is mounted on the vehicle underfloor 10, the MPU that composes the arithmetic unit 311 reads from the memory 312 and executes it at startup. Alternatively, when the function of the arithmetic unit 311 is implemented by an FPGA instead of the MPU, the memory 312 may be specialized in storing the calculation result of the arithmetic unit 311. The calculation by the arithmetic unit 311 may include a simple diagnostic process in addition to the above data conversion process.

The calculation result data by the arithmetic unit 311 is saved in the memory 312, and when the vehicle 1 stops at station premises, a vehicle depot, or a predetermined vehicle stop, the saved calculation result data is output to a diagnostic device 501 provided at those locations. On this occasion, data acquisition date and time, information for identifying the vehicle 1 for which data has been acquired, and information for identifying the condition monitoring device 300 which executed data acquisition may be added and transmitted. The identification of the vehicle 1 to be maintained is expedited by outputting these attached data together with the calculation result data to the diagnostic device 501. The data can also be used for comparative analysis of a vehicle with a short maintenance period and a vehicle with a long maintenance period.

A physical signal cable may be used for the data output for the diagnostic device 501, but in the embodiment, the output is wirelessly performed via the communication unit 401 and an antenna 402. Therefore, the communication unit 401 is a unit that modulates the data output from the memory 312 into an appropriate format in order to transmit it by wireless communication, and the signal after this modulation is output from the antenna 402. Further, the method using the communication unit 401 and the antenna 402 are not limited to the wireless method, and may be another communication method such as infrared communication.

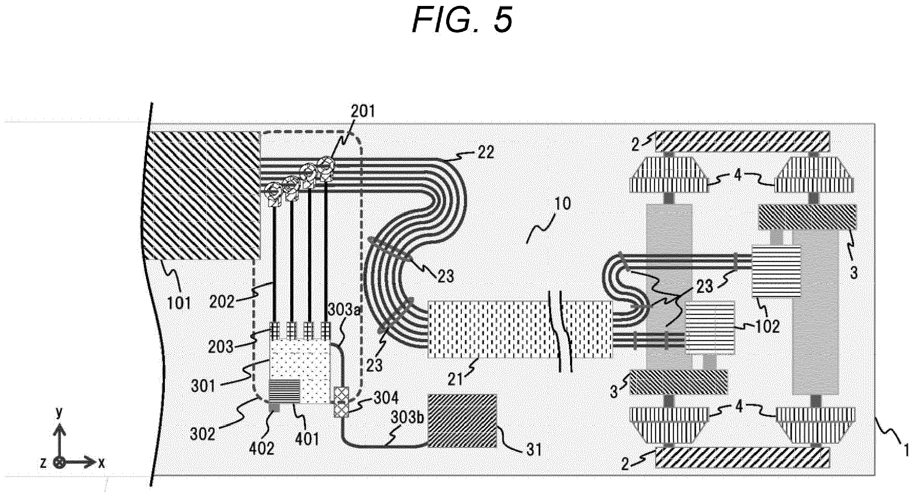

Further, for the mounting of the communication unit 401 and the antenna 402, as shown in FIG. 1(a), it is preferable that the communication unit 401 and the antenna 402 be integrated with the condition monitoring device 300. With such a configuration, the configuration of the device can be simplified, and the installation work of the condition monitoring device 300 on the existing vehicle 1 can be made more efficient. Further, it is desirable that the antenna 402 be installed so as to be exposed from the shielding housing 302 as shown in FIG. 1(a) and do not interfere with wireless communication. As for the installation of the antenna 402, as shown in FIG. 5 described later, a window that is not shielded by metal may be provided in part of the shielding housing 302 and disposed there. With such an arrangement, it is possible to reduce the possibility that pebbles or the like flipped from the road surface will hit and damage the antenna 402.

When the data acquired from the condition monitoring device 300 while the vehicle 1 is operating is passed to the diagnostic device 501, the diagnostic device 501 that receives the data analyzes and evaluates the operating state. When an abnormality or a sign of an abnormality is detected, the diagnostic device 501 notifies the administrator of the vehicle 1 of the result. The administrator who received the report can examine the maintenance time for the inverter device 101 and the rotating electric machine 102, and the urgency of updating them, and can perform maintenance of the electric drive system mounted on the vehicle 1 at an appropriate timing. As a result, the electric drive system of the vehicle 1 can be operated efficiently and can improve the reliability, compared with the system using the conventional time-based maintenance.

Further, the above example relates to a case where information is transmitted from the condition monitoring device 300 to the diagnostic device 501. On the other hand, communication may be carried out from the diagnostic device 501 for the purpose of updating the algorithm of the arithmetic unit 311. In this case, the communication unit 401 and the antenna 402 of the condition monitoring device 300 are configured to support two-way communication, and operate to write the update data transmitted from the diagnostic device 501 to the memory 312. As a result, the algorithm can be easily changed when the measurement environment is significantly different, and the measurement accuracy can be improved.

As described above, as the embodiment, the condition monitoring device 300 of the electric drive system in the vehicle 1 driven by the electric drive system including at least the inverter device 101 which is power conversion device, and the rotating electric machine 102 is described. This condition monitoring device 300 is attached to the main wiring 22 which is the electric wiring connecting the inverter device 101 and the rotating electric machine 102, and includes the sensor 201 for measuring at least either the current or the voltage in the electric wiring. The signal output from the sensor 201 is transmitted to the signal processing unit 301 via the signal cable 202, and is converted to a predetermined format in the signal processing unit 301. This conversion is mainly an extraction calculation of the feature amount that can be used for state diagnosis in the diagnostic device 501. That is, the signal processing unit 301 includes the arithmetic unit 311 for calculating a predetermined feature amount based on the measurement result of the sensor 201, and the memory 312 for storing the calculation result.

The calculation result of the signal processing unit 301 is read from the memory 312, and is transmitted to the outside of the vehicle 1 via the communication unit 401 and the antenna 402, which are communication units. The transmission destination is the diagnostic device 501 installed at a predetermined vehicle stop, and the diagnostic device 501 may be installed at a station or a vehicle depot instead of the vehicle stop.

By configuring the condition monitoring device 300 in this way, condition monitoring of the electric drive system and the vehicle can be achieved without replacing the existing electric drive system while suppressing the influence of external noise.

Further, the condition monitoring device 300 and the inverter device 101 share an object to which the condition monitoring device 300 and the inverter device 101 are fixed, and specifically, they are fixed to the vehicle underfloor 10 or the beam 11. By adopting such a fixing method, the relative position of the inverter device 101 and the condition monitoring device 300 does not change, and the signal cable 202 can be prevented from falling off. In addition, it has the power cable 303 of the condition monitoring device 300, and the power cable 303 is attached to the nearest terminal block 32 at the vehicle underfloor 10 of the vehicle 1, so that the condition monitoring device 300 can be operated without using a dedicated power supply or the like.

### Second embodiment

Next, the second embodiment which is a modification of the first embodiment will be described. In the explanation of the embodiment, the description of the contents common to those of the first embodiment will be omitted.

FIG. 5 is a vehicle underfloor layout view of the vehicle 1 to which the condition monitoring device 300 in the embodiment is attached when viewed from the ground. The difference from FIG. 1 is that the shielding housing 302 for covering the sensor 201 is configured to also cover the signal processing unit 301. In this way, the configuration in which the shielding housing 302 houses the entire signal processing unit 301, the sensor 201, and the signal cable 202 is provided, so that the influence of noise on the signal cable 202 can be further reduced. In addition, since the signal cable 202 is housed in the shielding housing 302, the risk of the signal cable 202 falling out of the condition monitoring device 300 while the vehicle 1 is traveling can be avoided.

As shown in FIG. 5, the power cable 303 may be divided into an external cable 303b and an internal cable 303a of the shielding housing 302 via the power connector 304, or as in FIG. 1, the condition monitoring device 300 may be configured to include the power connector 304. Further, the antenna 402 is configured to be exposed from the shielding housing 302 so as to maintain the sensitivity.

### Third embodiment

Next, the third embodiment which is a modification of the first embodiment will be described. In the explanation of the embodiment, the description of the contents common to those of the first embodiment will be omitted.

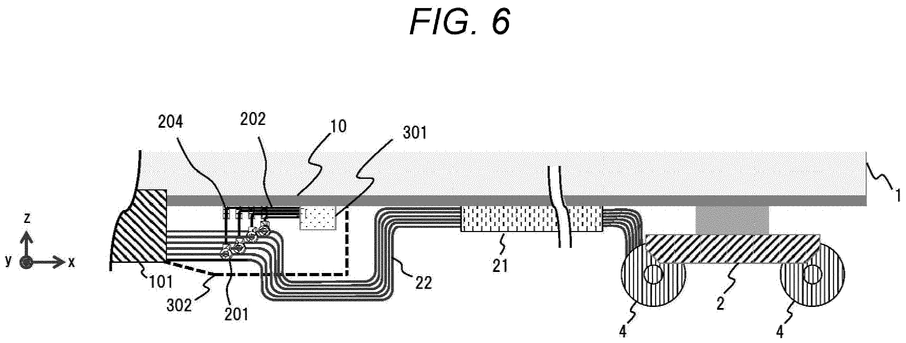

FIG. 6 is a vehicle underfloor layout view of the vehicle 1 to which the condition monitoring device 300 of the embodiment is attached when viewed from the side. The difference from FIG. 1 is that the signal cable 202 connected to the sensor 201 is suspended from a fixture 204. The fixture 204, which is a suspension portion, is firmly fixed to the vehicle underfloor 10 or the beam 11. With this configuration, it is possible to avoid the risk that the sensor 201 will be disconnected from the main wiring 22 while the vehicle 1 is traveling.

### Fourth embodiment

Next, the fourth embodiment which is a modification of the first embodiment will be described. In the explanation of the embodiment, the description of the contents common to those of the first embodiment will be omitted.

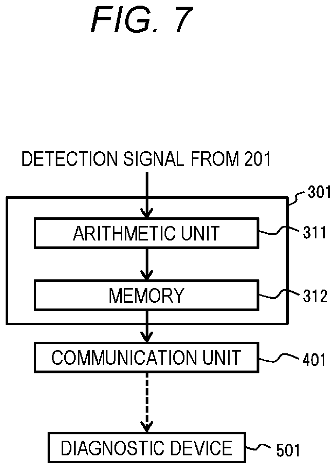

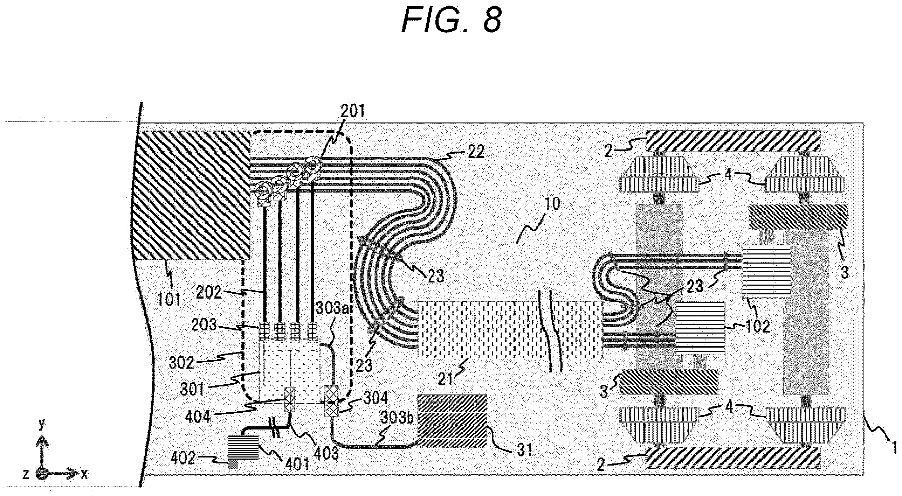

FIG. 7 is a diagram showing a signal processing flow of the condition monitoring device according to the fourth embodiment of the present invention. FIG. 8 is a vehicle underfloor layout view seen from the ground in the fourth embodiment of the present invention.

The difference between FIG. 7 and FIG. 3 is that the communication unit 401 and the antenna 402 are configured separately from the condition monitoring device 300. At this time, as shown in FIG. 8, the communication unit 401 is installed in a place away from the signal processing unit 301, and the calculation result obtained by the signal processing unit 301 is transmitted to the communication unit 401 via a data transmission cable 403. The data transmission cable 403 is preferably a shielded wire and also it is desirable to use a data transmission cable connector 404 for connection with the signal processing unit 301.

The condition monitoring device 300 of the present embodiment makes it possible to install the communication unit 401 and the antenna 402 in a place where there are few interfering objects at the vehicle underfloor 10, and data transmission to the diagnostic device 501 is easier at various places such as station premises, a vehicle depot, or a predetermined vehicle stop. This embodiment is particularly useful when the condition monitoring device 300 is attached to a vehicle in which the electric drive system parts are densely mounted on the vehicle underfloor 10, and data can be reliably transmitted from the communication unit 401 and the antenna 402 to the diagnostic device 501 even when there are many interfering objects, as obstacles, around the condition monitoring device 300 when data is transmitted.

The power supply to the communication unit 401 may be supplied by pulling out the power cable from the power distribution box 31 in the same manner as the signal processing unit 301. Since the communication unit 401 and the antenna 402 are installed in a place where there are few interfering objects as described above, power can be supplied from the diagnostic device 501 by wireless power supply. In the case of wireless power supply, the power cable is not required, so that the retrofitting work can be simplified and the problem of noise inflow through the power cable can be solved.

Further, when a signal output cable to the on-board device is provided at the vehicle underfloor 10, the data transmission cable 403 may be connected to the cable. When connected in this way, it is possible to transmit the calculation result data of the condition monitoring device 300 to the diagnostic device 501 by using the wireless function of the on-board device. When the calculation result data can be transmitted in this way, it is not necessary to attach the communication unit 401 and the antenna 402 for the condition monitoring device 300, so that the man-hours required to install the condition monitoring device 300 can be further reduced.

In the above, a plurality of embodiments of the present invention has been given as examples. The present invention is not limited to these embodiments, and members can be appropriately changed, deleted, expanded, or reduced as long as the gist of the invention is not changed. Further, each embodiment can be used in combination, and a plurality of condition monitoring devices may be provided on the target vehicle.

Further, since the condition monitoring device according to the present invention can be operated without being incorporated in the inverter device or the rotating electric machine in advance, the replacement cost of the device can be significantly reduced. For example, as another way to introduce condition monitoring technology to an existing vehicle, there is a method of acquiring current information from an ammeter mounted on an existing inverter, but the present invention is more useful than this method. This is because when the software with built-in inverter is modified so that the feature amount for condition monitoring for an existing inverter device and a rotating electric machine can be extracted, it is necessary to redo all the quality certification tests related to the software operation for the vehicle that is already in operation, and thus, the above mentioned method is not desirable in terms of cost and software soundness. However, the present invention makes it possible to retrofit a condition monitoring device to an existing electric drive system while suppressing the impact on existing equipment, so that condition monitoring of the electric drive system and the vehicle can be implemented without replacing the existing electric drive system. This enables efficient maintenance and realizes highly reliable operation of the transportation vehicle.

### Reference Signs List

- 1: vehicle
- 2: carriage
- 3: gearbox
- 4: wheel
- 10: vehicle underfloor
- 11: beam
- 21: metal duct
- 22: main wiring
- 23: binding band
- 31: power distribution box
- 32: terminal block
- 101: inverter device
- 102: rotating electric machine
- 201: sensor
- 202: signal cable
- 203: connector
- 204: fixture
- 300: condition monitoring device
- 301: signal processing unit
- 301a: mounting seat
- 302: shielding housing
- 303: power cable
- 303a: internal cable
- 303b: external cable
- 304: power connector
- 311: arithmetic unit
- 312: memory
- 401: communication unit
- 402: antenna
- 403: data transmission cable
- 404: data transmission cable connector
- 501: diagnostic device

## Claims

1. A condition monitoring device for an electric drive system in a transportation vehicle driven by the electric drive system including at least a power conversion device and a rotating electric machine,
the condition monitoring device comprising at least:
a sensor that is attached to electric wiring connecting the power conversion device and the rotating electric machine and measures at least either a current or a voltage in the electric wiring;
a signal processing unit for obtaining a signal output from the sensor via a signal cable and converting the signal into a predetermined format;
a communication unit for transmitting an output of the signal processing unit to an outside of the transportation vehicle; and
a shielding housing for converting the sensor.

2. The condition monitoring device according to claim 1, wherein
the condition monitoring device and the power conversion device share an object to which the condition monitoring device and the power conversion device are fixed.

3. The condition monitoring device according to claim 1 or 2, wherein
the condition monitoring device has a power cable, and
the power cable is attached to a nearest power distribution terminal at a vehicle underfloor of the transportation vehicle.

4. The condition monitoring device according to any one of claims 1 to 3, wherein
a metal duct for exposing a portion of the electric wiring and covering the remaining portion is provided in the transportation vehicle, and the sensor is installed on an exposed portion of the electric wiring.

5. The condition monitoring device according to any one of claims 1 to 4, wherein
the shielding housing covers the signal processing unit in addition to the sensor.

6. The condition monitoring device according to any one of claims 1 to 5, wherein
the signal cable is a shielded wire.

7. The condition monitoring device according to any one of claims 1 to 6, wherein
the communication unit is provided integrally with the signal processing unit.

8. The condition monitoring device according to any one of claims 1 to 7, wherein
the signal processing unit includes at least
an arithmetic unit for calculating a predetermined feature amount based on a measurement result of the sensor, and
a memory for storing a calculation result of the arithmetic unit, and
the communication unit transmits the calculation result stored in the memory to a diagnostic device installed at a predetermined vehicle stop.

9. The condition monitoring device according to claim 8, wherein
the communication unit is powered by wireless power supply during communication with the diagnostic device.

10. A transportation vehicle on which the condition monitoring device according to any one of claims 1 to 9 is mounted, the transportation vehicle comprising:
a vehicle underfloor member to which the electrical conversion device is attached,
wherein the signal processing unit and the shielding housing of the condition monitoring device are fixed to the vehicle underfloor member.

11. The transportation vehicle according to claim 10, wherein
the vehicle underfloor member has a suspension portion from which a signal cable of the condition monitoring device is suspended.

12. The transportation vehicle according to claim 10 or 11, wherein
the shielding housing is fixed in a state of being electrically conductive with the vehicle underfloor member.

13. The transportation vehicle according to any one of claims 10 to 12, wherein
a housing of the signal processing unit is fixed in a state of being electrically conductive with the vehicle underfloor member.

14. The transportation vehicle according to any one of claims 10 to 13, wherein
the rotating electric machine is fixed to a carriage having an axle and a wheel to which power is transmitted by the rotating electric machine, and
the carriage and the vehicle underfloor member are configured to have a relative position that is changeable.

15. The transportation vehicle according to any one of claims 10 to 14, wherein
the power distribution terminal to which the power cable is connected is provided in a power distribution box for distributing electric power to in-vehicle equipment of the transportation vehicle, and
the power distribution box is attached to the vehicle underfloor member.
